# EUROPEAN PATENT APPLICATION

(11) **EP 2 290 203 A1**
(43) Date of publication of application: **02.03.2011**
(21) Application number: 10008679.2
(22) Date of filing: 19.08.2010
(51) Int. Cl.: F01N 3/023, F01N 3/035, B01D 53/94

(54) **Partial coating of platinum group metals on filter for increased soot mass limit and reduced costs**

(30) Priority: 25.08.2009 US 546994
(71) Applicant: International Engine Intellectual Property Company, LLC, Warrenville IL 60555 (US)
(72) Inventor: Adelman, Brad J., Chicago IL 60610 (US); Strots, Vadim, Forest Park IL 60130 (US); Santhanam, Shyam, Aurora IL 60504 (US)
(74) Representative: Kuhnen & Wacker

(57) **Abstract**

A diesel particulate filter (42) has a thin band (55,65) of washcoated filter material either on the inlet of the upstream side or the outlet of the downstream side. The washcoating is with platinum group metals (PGM), e.g., Pt and Pd added to the surface and pore structure of a DPF (42). The DPF should provide comparable or improved distance between active regeneration and/or should prevent HC/CO slip during active DPF regeneration.

## Description

### FIELD OF THE INVENTION

This invention relates generally to motor vehicles, such as trucks, that are powered by internal combustion engines, particularly diesel engines that have exhaust gas treatment devices for treating exhaust gases passing through their exhaust systems.

### BACKGROUND OF THE INVENTION

A known system for treating exhaust gas passing through an exhaust system of a diesel engine comprises a diesel oxidation catalyst (DOC) that oxidizes hydrocarbons (HC) to CO2 and H2O and converts NO to NO2, and a diesel particulate filter (DPF) that traps diesel particulate matter (DPM). DPM includes soot or carbon, the soluble organic fraction (SOF), and ash (i.e. lube oil additives etc.). The DPF is located downstream of the DOC in the exhaust gas flow. The combination of these two exhaust gas treatment devices prevents significant amounts of pollutants such as hydrocarbons, carbon monoxide, soot, SOF, and ash, from entering the atmosphere. The trapping of DPM by the DPF prevents black smoke from being emitted from a vehicle's exhaust pipe.

The DOC oxidizes hydrocarbons (HC) and converts NO to NO2. The organic constituents of trapped DPM within the DPF, i.e., carbon and SOF, are oxidized within the DPF, using the NO2 generated by the DOC, to form CO2 and H2O, which can then exit the exhaust pipe to atmosphere.

The rate at which trapped carbon is oxidized to CO2 is controlled not only by the concentration of NO2 or 02 but also by temperature. Specifically, there are three important temperature parameters for a DPF.

The first temperature parameter is the oxidation catalyst's "light off" temperature, below which catalyst activity is too low to oxidize HC. Light off temperature is typically around 180-200°C.

The second temperature parameter controls the conversion of NO to NO2. This NO conversion temperature spans a range of temperatures having both a lower bound and an upper bound, which are defined as the minimum temperature and the maximum temperature at which 40% or greater NO conversion is achieved. The conversion temperature window defined by those two bounds extends from approximately 250°C. to approximately 450° C.

The third temperature parameter is related to the rate at which carbon is oxidized in the filter. Reference sources in relevant literature call that temperature the "Balance Point Temperature" (or BPT). It is the temperature at which the rate of oxidation of particulate, also sometimes referred to as the rate of DPF regeneration, is equal to the rate of accumulation of particulate. The BPT is one of the parameters that determines the ability of a DPF to enable a diesel engine to meet expected tailpipe emissions laws and/or regulations.

Typically, a diesel engine runs relatively lean and relatively cool compared to a gasoline engine. That factor makes natural achievement of BPT problematic.

Therefore, a DPF requires regeneration from time to time in order to maintain particulate trapping efficiency. Regeneration involves the presence of conditions that will burn off trapped particulates whose unchecked accumulation would otherwise impair DPF effectiveness. While "regeneration" refers to the general process of burning off DPM, two particular types of regeneration are recognized by those familiar with the regeneration technology as presently being applied to motor vehicle engines.

"Passive regeneration" is generally understood to mean regeneration that can occur anytime that the engine is operating under conditions that burn off DPM without initiating a specific regeneration strategy embodied by algorithms in an engine control system. "Active regeneration" is generally understood to mean regeneration that is initiated intentionally, either by the engine control system on its own initiative or by the driver causing the engine control system to initiate a programmed regeneration strategy, with the goal of elevating temperature of exhaust gases entering the DPF to a range suitable for initiating and maintaining burning of trapped particulates.

Active regeneration may be initiated even before a DPF becomes loaded with DPM to an extent where regeneration would be mandated by the engine control system on its own. When DPM loading beyond that extent is indicated to the engine control system, the control system forces active regeneration, and that is sometimes referred to simply as a forced regeneration.

The creation of conditions for initiating and continuing active regeneration, whether forced or not, generally involves elevating the temperature of exhaust gas entering the DPF to a suitably high temperature.

There are several methods for initiating a forced regeneration of a DPF such as retarding the start of main fuel injections or post-injection of diesel fuel to elevate exhaust gas temperatures entering the DPF while still leaving excess oxygen for burning the trapped particulate matter. Post-injection may be used in conjunction with other procedures and/or devices for elevating exhaust gas temperature to the relatively high temperatures needed for active DPF regeneration.

These methods are able to increase the exhaust gas temperature sufficiently to elevate the catalyst's temperature above catalyst "light off" temperature and provide excess HC that can be oxidized by the catalyst. Such HC oxidation provides the necessary heat to raise the temperature in the DPF above the BPT.

However, during such short rich operation, the exhaust gas in enriched with hydrocarbons (HC) and carbon monoxide (CO) while the oxygen concentration in the exhaust gas is drastically depleted.

The amount of HC and CO generated by the engine during the rich operation typically exceeds the stoichiometric quantity of NOx that is to be reduced over the catalyst. This excess of reductant, while necessary for high NOx reduction efficiencies, leads to HC and CO breakthroughs at the DOC outlet ("HC/Co slip"), wherein the HC/CO slip cannot be oxidized to CO2 and H2O.

Traditional coated DPF have a washcoat throughout the filter to prevent HC/CO slip and increased emissions. However, a coated DPF has a lower soot-mass-limit to prevent deactivation of the catalyst from high bed temperatures generated during active regeneration.

Uncoated DPF are used in conjunction with a DOC and operated in a passive manner (no active filter regeneration) or if used with an active regeneration then have a reduced rate of passive regeneration compared to a coated filter or have an increased risk of HC/CO slip. The time elapsed between active filter regeneration is decreased as a result of the lower rate of passive soot oxidation.

### SUMMARY

The disclosed embodiments of the invention provide a DPF which has a thin band of washcoated filter material either on the inlet of the upstream side or the outlet of the downstream side. The washcoating is with platinum group metals (PGM), e.g., Pt and Pd added to the surface and pore structure of a DPF. The PDF should provide comparable or improved distance between active regeneration and/or should prevent HC/CO slip during active DPF regeneration. The embodiments of the invention should also reduce the cost of the aftertreatment system by minimizing the PGM applied to the filter. The aftertreatment system should operate and function in the same manner as a fully coated DPF although the interval between active regeneration could be increased or alternatively the size of the filter can be reduced.

According to a first embodiment, a coating of platinum group metals (PGM), e.g., Pt and Pd is applied to the surface and pore structure of a relatively thin band of filter media within an inlet portion of the DPF media on the upstream side. Due to the presence of the coating, additional NO2 can thus be formed and therefore increase the rate of passive regeneration. In addition, since the coating is only on a front portion of the filter, it will be able to bum any HC/CO slip from the DOC during active regeneration while not being exposed to the exotherm from burning the HC/CO slip coupled with the burning of the storage soot on the filter. It is known that the temperature rise within the DPF is greater towards the rear of the DPF as opposed to the front. This exotherm becomes pronounced in situations where regeneration has been initiated but then is quickly interrupted (e.g. drop-to-idle). By having the coating only at the front of the filter, it will be possible to minimize HC/CO slip, maintain passive regeneration and increase the soot-mass-limit of the filter.

According to a second embodiment, a coating of platinum group metals (PGM), e.g., Pt and Pd is applied to the surface and pore structure of a relatively thin band of filter media within an outlet portion of the DPF media on the downstream side. Although this will not increase the rate of passive regeneration other than that from the DOC, it will allow for HC/CO slip mitigation during active regeneration. Since the coating is on the downstream side, HC/CO will be in contact with a catalyst even if it traverses the filter wall toward the inlet. Also, since the coating will not be in direct contact with soot, there will not be any accelerated soot bum during conditions such as drop-to-idle. This in turn will minimize the peak bed temperature and prevent ring-cracking, pitting or melting which could occur if the coating was on the upstream side and in contact with the soot. Though this configuration will be exposed to higher peak temperatures than if the coating was placed on the inlet of the DPF on the upstream side, the impact will not be as pronounced since this configuration is not relying on the coating to perform, enhance or promote passive regeneration. The function of the washcoat in this configuration is to bum any HC/CO slip during active regeneration.

Numerous other advantages and features of the present invention will be become readily apparent from the following detailed description of the invention and the embodiments thereof, from the claims and from the accompanying drawings.

### BRIEF DESCRIPTION OF THE DRAWINGS

FIG. 1 is a schematic illustration of a representative diesel engine and control with an exhaust after-treatment device;

FIG. 2 is a schematic sectional view of a first embodiment DPF of the invention; and

FIG. 3 is a schematic sectional view of a second embodiment DPF of the invention.

### DETAILED DESCRIPTION

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

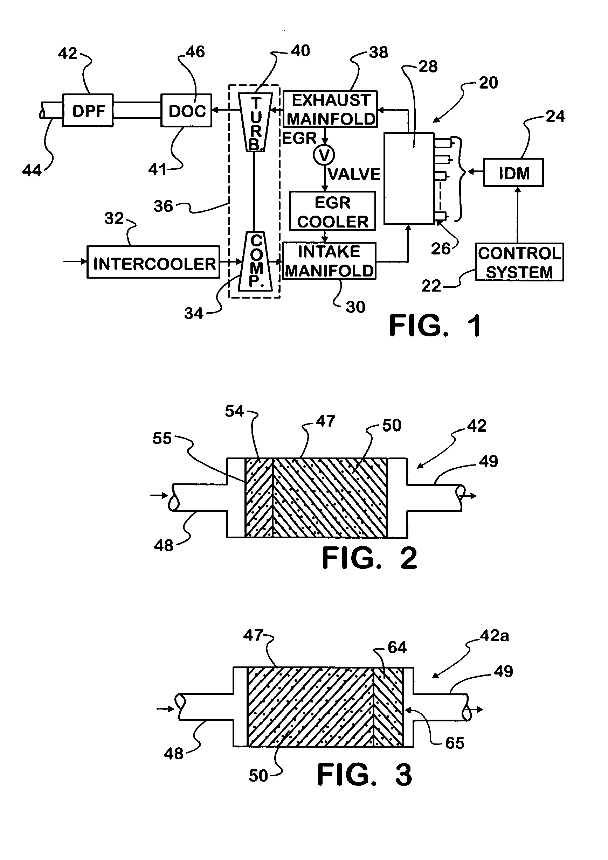

FIG. 1 shows a schematic diagram of an exemplary diesel engine 20 for powering a motor vehicle. Engine 20 has a processor-based engine control system 22 that processes data from various sources to develop various control data for controlling various aspects of engine operation. The data processed by control system 22 may originate at external sources, such as sensors, and/or be generated internally.

Control system 22 includes an injector driver module 24 for controlling the operation of electric-actuated fuel injectors 26 that inject fuel into combustion chambers in the engine cylinder block 28. A respective fuel injector 26 is associated with each cylinder and comprises a body that is mounted on the engine and has a nozzle through which fuel is injected into the corresponding engine cylinder. A processor of engine control system 22 can process data sufficiently fast to calculate, in real time, the timing and duration of injector actuation to set both the timing and the amount of fueling.

Engine 20 further comprises an intake system having an intake manifold 30 mounted on block 28. An intercooler 32 and a compressor 34 of a turbocharger 36 are upstream of manifold 30. Compressor 34 draws air through intercooler 32 to create charge air that enters each engine cylinder from manifold 30 via a corresponding intake valve that opens and closes at proper times during engine cycles.

Engine 20 also comprises an exhaust system through which exhaust gases created by combustion within the engine cylinders can pass from the engine to atmosphere. The exhaust system comprises an exhaust manifold 38 mounted on block 28. Exhaust gases pass from each cylinder into manifold 38 via a respective exhaust valve that opens and closes at proper times during engine cycles.

Turbocharging of engine 20 is accomplished by turbocharger 36 that further comprises a turbine 40 associated with the exhaust system and coupled via a shaft to compressor 34. Hot exhaust gases acting on turbine 40 cause the turbine to operate compressor 34 to develop the charge air that provides boost for engine 20.

The exhaust system further comprises a DOC 41 and DPF 42 downstream of turbine 40 for treating exhaust gas before it passes into the atmosphere through an exhaust pipe 44. Although the DOC 41 and the DPF 42 are shown as separate components, it is also possible that the DOC 41 and the DPF 42 share a common housing.

DPF 42 physically traps a high percentage of DPM in exhaust gas passing through it, preventing the trapped DPM from passing into the atmosphere. Oxidation catalyst 46 within the DOC 41 oxidizes hydrocarbons (HC) in the incoming exhaust gas to CO2 and H2O and converts NO to NO2. The NO2 is then used to reduce the carbon particulates trapped in DPF 42.

With regard to passive and active regeneration as mentioned above, U.S. Patent 6,829,890; and U.S. Published Patent Applications 2008/0184696 and 2008/0093153 describe systems and methods for undertaking regeneration. These patents and publications are herein incorporated by reference.

A first embodiment DPF 42 is shown in FIG. 2. The DPF includes a housing 47 having an inlet 48 and an outlet 49 and containing a filter media or filter material throughout. The filter media is composed of (but not limited to) cordierite, silicon carbide, aluminum titanate, mullite or other porous ceramic material, or woven metal or ceramic fibers.
Ceramic or refractory materials for diesel particulate filters are described in U.S. Patents 6,942,708; 4,510,265; and 4,758,272, herein incorporated by reference.
A washcoat 54 of platinum group metals (PGM), e.g., Pt and Pd is applied to the surface and pore structure of a relatively thin band 55 of filter media 50 within an inlet portion of the DPF media on the upstream side of the DPF 42. The relatively thin band 55 can be up to about 25% of the length of the media 50.

Due to the presence of the PGM, additional NO2 can thus be formed and therefore increase the rate of passive regeneration within the DPF 42. In addition, since the coating 54 is only on a front portion of the DPF 42, it will be able to bum any HC/CO slip from the DOC during active regeneration while not being exposed to the exotherm from burning the HC/CO slip coupled with the burning of the storage soot on the filter. It is known that the temperature rise within the DPF is greater towards the rear of the DPF as opposed to the front. This exotherm becomes pronounced in situations where regeneration has been initiated but then is quickly interrupted (e.g. drop-to-idle). By having the coating only at the front of the filter, it will be possible to minimize HC/CO slip, maintain passive regeneration and increase the soot-mass-limit of the filter.

The maximum bed temperature should be limited so that the PGM does not sinter excessively. Also, the interaction between the washcoat and filter material may lead to lower tolerance to thermal events (peak bed temperature, axial/radial thermal gradient). In order to prevent excessive PGM sintering or filter failure induced from the washcoat-filter material interaction, the soot mass limit (SML) can be lowered so that an active DPF regeneration event is commanded more frequently for equivalent volume of filter.

A second embodiment DPF 42a is shown in Figure 3. A washcoat 64 of platinum group metals (PGM), e.g., Pt and Pd is applied to the surface and pore structure of a relatively thin band 65 of filter media 50 within an outlet portion of the DPF media on the downstream side of the DPF 42. The relatively thin band 55 can be up to about 25% of the length of the media 50. Although this will not increase the rate of passive regeneration over that generated by the DOC, it will allow for HC/CO slip mitigation during active regeneration. Since the coating is on the downstream side, HC/CO will be in contact with a catalyst even if it traverses the filter.

Also, since the coating 64 will not be in direct contact with soot, there will not be any accelerated soot burn during conditions such as drop-to-idle. This in turn should minimize the peak bed temperature and prevent ring-cracking, pitting or melting. Though the coating of this embodiment will be exposed to higher peak temperatures than if the coating was placed on the inlet of the DPF on the upstream side, this should not be detrimental since this coating is not intended to perform, enhance or promote passive regeneration. The function of the washcoat in this configuration is to burn any HC/CO slip during active regeneration.

From the foregoing, it will be observed that numerous variations and modifications may be effected without departing from the spirit and scope of the invention. It is to be understood that no limitation with respect to the specific apparatus illustrated herein is intended or should be inferred.

## Claims

1. A diesel particulate filter, comprising:
a housing having an inlet and an outlet and containing a diesel particulate filter material therein wherein a band of said filter material includes a washcoat with platinum group metals added to the surface and pore structure of the filter material.

2. The diesel particulate filter according to claim 1, wherein said band is located adjacent to said inlet.

3. The diesel particulate filter according to claim 1, wherein said band is located adjacent to said outlet.

4. The diesel particulate filter according to claim 1, wherein said platinum group metals comprises at least one metal selected from Pt and Pd.

5. An exhaust gas aftertreatment system for a diesel engine, comprising:
a containment defining a flow path for exhaust gas;
a diesel oxidation catalyst unit arranged in the flow path;
a diesel particulate filter unit arranged in the flow path downstream of the diesel oxidation unit, wherein the diesel particulate filter comprises a housing having an inlet and an outlet and containing a diesel particulate filter material therein wherein a band of said filter material includes a washcoat with platinum group metals added to the surface and pore structure of the filter.

6. The diesel particulate filter according to claim 5, wherein said band is located adjacent to said inlet.

7. The diesel particulate filter according to claim 6, wherein said platinum group metals comprises at least one metal selected from Pt and Pd.

8. The diesel particulate filter according to claim 5, wherein said band is located adjacent to said outlet.

9. The diesel particulate filter according to claim 8, wherein said platinum group metals comprises at least one metal selected from Pt and Pd.

10. The diesel particulate filter according to claim 5, wherein said platinum group metals comprises at least one metal selected from Pt and Pd.
